# FASCICULE DE BREVET EUROPEEN

(11) **EP 2 428 277 B1**
(45) Date de publication et mention de la délivrance du brevet: **11.06.2014**
(21) Numéro de dépôt: 11176646.5
(22) Date de dépôt: 05.08.2011
(51) Int. Cl.: B05B 1/30, F16L 55/027, E03B 7/07

(54) **Limiteur de débit de fluide**
Flüssigkeitsdurchflussregler
Fluid flow limiter

(30) Priorité: 10.09.2010 EP 10305977
(43) Date de publication de la demande: 14.03.2012
(73) Titulaire: Itron France, 92130 Issy-Les-Moulineaux (FR)
(72) Inventeur: Hommel, Yannick, 67840 Kilstett (FR); Mathiou, Nicolas, 67500 Haguenau (FR)
(74) Mandataire: Howson, Richard G.B.

(56) Documents cités:
- FR-A5- 2 117 611
- GB-A- 2 199 639
- US-A- 2 716 427

## Description

L'invention concerne un limiteur de débit de fluide, en particulier d'eau.

Il est courant d'installer en particulier sur des installations d'irrigation un limiteur de débit, afin de contrôler la consommation d'eau. Les agriculteurs sont ainsi limités en débit de consommation, sachant qu'ils souscrivent à un abonnement pour un débit maximal délivré par la société qui gère le réseau de distribution d'eau.

Un tel limiteur connu comporte un siège installé à l'extrémité de la canalisation d'irrigation et supportant une rondelle déformable, en caoutchouc. Le principe de fonctionnement d'un tel limiteur se fonde sur la déformation de cette rondelle soumise à une pression axiale de débit d'eau venant de la canalisation et qui, en se déformant, entraîne une diminution de son orifice central de passage, limitant ainsi de débit d'eau sortant. Afin de contrôler ce phénomène, cette diminution est limitée grâce à des moyens de butée disposés dans cet orifice. Ces moyens sont constitués de plusieurs tiges métalliques brasées sur le siège et convergentes dans l'orifice de la rondelle selon une forme en section semi-circulaire définissant un passage minimal de l'eau par butée de la rondelle déformée sur ces tiges.

Ce type de limiteur pose plusieurs problèmes.

Compte-tenu de l'assemblage soudé ou brasé des tiges sur le siège, lorsqu'une ou plusieurs tiges casse(nt), la société gestionnaire du réseau de distribution doit remplacer le limiteur dans son ensemble, y compris le siège, car il est difficile et coûteux de changer uniquement la ou les tige(s) cassée(s).

La fabrication d'un tel limiteur est techniquement complexe et donc longue et coûteuse. En effet, elle nécessite des opérateurs qualifiés et de nombreuses opérations dont celles de découpage, de cintrage, de brasage au chalumeau et de recuit dans un four à température élevée. Elle comporte donc des risques importants d'accidents inhérents à la technologie.

Dans certaines applications spécifiques où le réseau de distribution présente une forte pression, la pression axiale peut être telle que la déformation de la rondelle écrase les tiges de butée et les déforment. Ceci entraîne un mauvais fonctionnement du limiteur qui dans ce cas réduit trop le débit.

Ce type de limiteur permet une fraude trop aisée. En effet, en écartant les tiges au moyen d'un outil, ladite forme de section semi-circulaire de l'ensemble des tiges peut être agrandie et le débit limité maximal est alors augmenté, tout en payant un abonnement inférieur.

Par ailleurs, le document de brevet GB 2 199 639 décrit un limiteur de débit de fluide, en particulier d'eau, comportant un support installé à l'extrémité d'une canalisation, une rondelle déformable en butée sur ce support de façon à avoir une de ces faces tournée vers l'arrivée de fluide sortant de la canalisation et des moyens de butée disposés dans l'orifice de cette rondelle.

Ces moyens de butée sont conformés d'une seule pièce par deux lames en croix dont une bride est en butée contre un épaulement du support du côté de la sortie du fluide.

En pratique, cette bride doit être solidarisée au support, a priori par soudage. En effet, sans cette solidarisation, la buse n'est pas maintenue en place et est emportée par le flux de fluide.

Il en résulte qu'un tel limiteur est de montage relativement complexe et nécessite des opérateurs qualifiés.

L'objet de l'invention est de résoudre ces problèmes.

Pour ce faire, l'invention propose un limiteur de débit de fluide, selon la revendication 1.

En cas de dommage de cette buse et surtout de ses moyens de butée, elle est seule remplacée, de façon aisée et peu coûteuse.

La buse peut être fabriquée par simple moulage ou équivalent, toute autre opération de fabrication étant supprimée.

Selon l'invention, lesdits moyens de butée sont des bras espacés et connectés à l'une de leurs extrémités au corps de la buse et à l'autre de leurs extrémités par un anneau les reliant.

Grâce à cet anneau, même si les bras sont de diamètre relativement réduit, il est impossible de modifier leur position par déformation. La fraude évoquée plus haut est donc impossible. De même, un fort débit d'eau ne peut entraîner une telle déformation.

De préférence, ladite buse est en métal.

L'invention est décrite ci-après plus en détail à l'aide de figures représentant uniquement un mode de réalisation préféré de l'invention.
La figure 1 est une vue en coupe longitudinale d'un limiteur conforme à un premier mode de réalisation de l'invention.
La figure 2 est une vue en perspective d'une buse et de son siège conforme à ce premier mode de réalisation de l'invention.
La figure 3 est une vue en coupe longitudinale d'un limiteur conforme à un second mode de réalisation de l'invention.

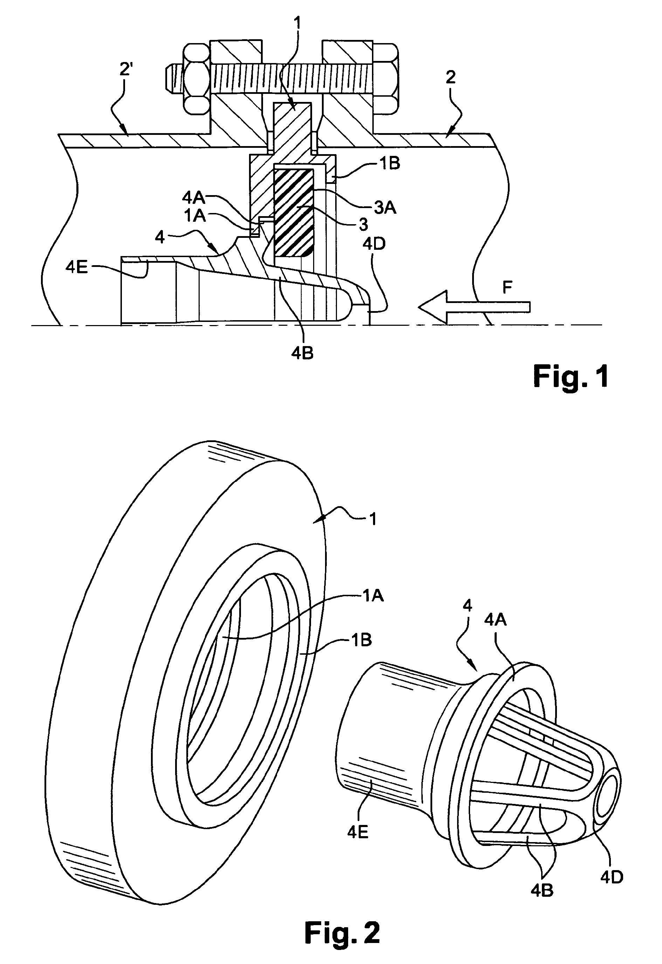

Comme représenté sur la figure 1, selon un premier mode de réalisation, l'invention propose un limiteur de débit de fluide, en particulier d'eau, comportant un support ou siège 1 installé à l'extrémité d'une canalisation 2, une rondelle déformable 3 supportée par ce siège de façon à avoir une de ces faces 3A tournée vers l'arrivée d'eau sortant de la canalisation 2 et des moyens de butée disposés dans l'orifice de cette rondelle 3.

Ces moyens de butée forment une buse 4 en métal dont une bride annulaire 4A est disposée entre le siège 1 et la rondelle 3, les moyens de butée étant conformés d'une seule pièce avec la buse 4.

Comme également visibles sur la figure 2, les moyens de butée sont des bras 4B espacés, ici au nombre de quatre, et connectés à l'une de leurs extrémités au corps de la buse 4 et à l'autre de leurs extrémités par un anneau 4D les reliant, ces bras étant inclinés de façon convergente.

Ce corps de la buse comporte un tronçon cylindrique 4E portant la bride annulaire 4A et formant un canal de sortie de l'eau.

Le montage de ce limiteur s'effectue par introduction de la buse 4 dans le siège 1, la bride 4A venant s'appuyer sur un épaulement 1A correspondant de ce siège. Puis la rondelle déformable 3 est insérée dans le siège sur cette bride 4A. La rondelle 3 est avantageusement retenue en place par une bride annulaire 1B portée par l'extrémité du siège. Le limiteur ainsi formé est monté à l'extrémité de la canalisation 2 par exemple par vissage. Selon l'exemple représenté, le siège 1 est pris en sandwich entre l'extrémité de la canalisation 2 et l'extrémité d'un tronçon de canalisation 2' et est solidarisé par serrage par boulonnage de brides correspondantes.

Le fonctionnement du limiteur est le suivant. Le flux d'eau F arrive de la canalisation 2 avec le débit du réseau de distribution et vient presser la face 3A de la rondelle déformable 3. Cette dernière se déforme selon le débit, son orifice de passage diminuant, et, au plus, vient buter contre les bras 4B de la buse 4, dans la position correspondante au débit maximal.

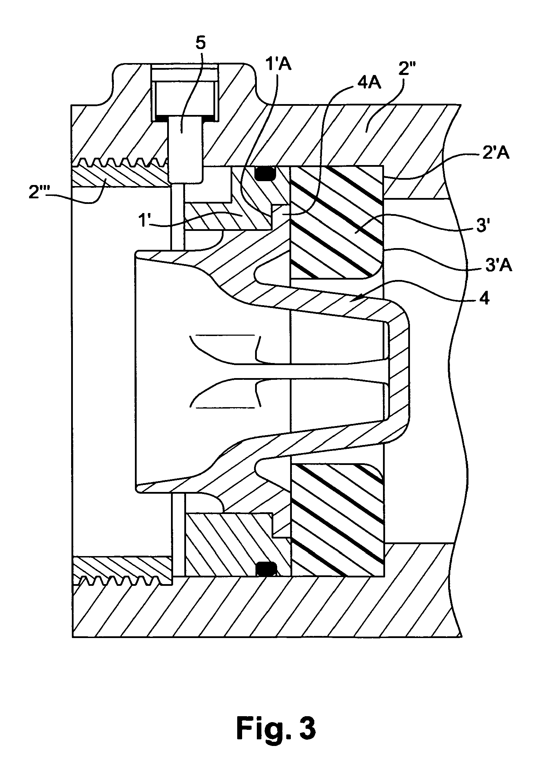

Comme représenté sur la figure 3, selon un second mode de réalisation, un limiteur de débit de fluide, en particulier d'eau, comporte un support ou siège 1' installé à l'extrémité d'une canalisation ou d'une tubulure ou prise d'irrigation 2", une rondelle déformable 3' supportée par ce siège de façon à avoir une de ces faces 3'A tournée vers l'arrivée d'eau sortant de la tubulure 2" et des moyens de butée disposés dans l'orifice de cette rondelle 3'.

Ces moyens de butée sont portés par une buse 4 identique à celle précédemment décrite selon le premier mode de réalisation. Elle comporte donc une bride annulaire 4A disposée entre le siège 1' et la rondelle 3'.

Une différence essentielle avec le premier mode de réalisation est la conformation du siège 1' qui est ici monté à l'extrémité de la tubulure 2" est qui y est bloqué en translation axiale par une vis 5 monté radialement dans la tubulure 2".

Selon l'exemple représenté, un raccord 2'" tubulaire de type raccord rapide est monté par vissage sur la tubulure 2".

Le montage de ce limiteur s'effectue par introduction de la buse 4 contre le siège 1', la bride 4A venant s'appuyer sur un épaulement 1'A correspondant de ce siège. Puis la rondelle déformable 3' est insérée contre le siège 1'. La rondelle 3' est avantageusement retenue en place par un épaulement 2"A porté par l'extrémité de la tubulure 2".

## Revendications

1. Limiteur de débit de fluide, en particulier d'eau, comportant un support (1, 1') installé à l'extrémité d'une canalisation ou d'une tubulure (2, 2"), une rondelle déformable (3, 3') supportée par ce support de façon à avoir une de ces faces tournée vers l'arrivée de fluide sortant de ladite canalisation ou de ladite tubulure et des moyens de butée disposés dans l'orifice de cette rondelle, lesdits moyens de butée étant conformés d'une seule pièce et formant une buse (4) dont une bride annulaire (4A) est disposée entre ledit support (1, 1') et ladite rondelle (3, 3'), **caractérisé en ce que** lesdits moyens de butée sont des bras (4B) espacés et connectés à l'une de leurs extrémités au corps de la buse et à l'autre de leurs extrémités par un anneau (4D) les reliant et **en ce que** ledit corps de la buse comporte un tronçon cylindrique (4E) portant ladite bride annulaire (4A).

2. Limiteur de débit selon la revendication précédente, **caractérisé en ce que** ladite buse (4) est en métal.

## Patentansprüche

1. Durchflussbegrenzer für ein Fluid, insbesondere Wasser, mit einem Träger (1, 1'), der am Ende einer Kanal- oder Rohrleitung (2, 2") installiert ist, mit einer verformbaren Scheibe (3, 3'), die von dem Träger derart getragen ist, dass eine ihrer Seiten zum Eintritt des aus der Kanal- oder Rohrleitung austretenden Fluids gerichtet ist, und mit Anschlagmitteln, die in der Öffnung der Scheibe angeordnet sind, welche Anschlagmittel einstückig ausgebildet sind und eine Düse (4) bilden, deren Ringflansch (4A) zwischen dem Träger (1, 1') und der Scheibe (3, 3') angeordnet ist, **dadurch gekennzeichnet, dass** die Anschlagmittel Arme (4B) sind, die in einem Abstand voneinander angeordnet und an einem ihrer Enden mit dem Düsenkörper und am anderen Ende durch einen sie verbindenden Ring (4D) verbunden sind, und dass der Düsenkörper einen Zylinderstumpf (4E) aufweist, der den Ringflansch (4A) trägt.

2. Durchflussbegrenzer nach dem vorhergehenden Ansprüche, **dadurch gekennzeichnet, dass** die Düse (4) aus Metall ist.

## Claims

1. Flow limiter for a fluid, in particular water, comprising a support (1, 1') installed at the end of a channel or a tube (2, 2"), a deformable washer (3, 3') supported by this support in such a way as to have one of its faces turned towards the incoming fluid from said channel or said tube and stop means disposed in the opening of this washer, said stop means being shaped in one piece and forming a nozzle (4) of which an annular flange (4A) is disposed between said support (1, 1') and said washer (3, 3'), **characterised in that** said abutment means are of branch (4B) spaced and connected at one of their ends to the body of the nozzle and at the other of their ends by a ring (4D) connecting them, and **in that** said body of the nozzle includes a cylindrical section (4E) bearing said annular flange (4A).

2. Flow limiter as claimed in the preceding claim, **characterised in that** said nozzle (4) is made of metal.
